# EUROPEAN PATENT APPLICATION

(11) **EP 1 865 308 A2**
(43) Date of publication of application: **12.12.2007**
(21) Application number: 07109785.1
(22) Date of filing: 07.06.2007
(51) Int. Cl.: G01N 21/88, F21V 9/08

(54) **System for providing monochromatic light**

(30) Priority: 07.06.2006 US 811552 P; 06.06.2007 US 758769
(71) Applicant: Siemens Energy & Automation, Inc., Alpharetta, GA 30005-4437 (US)
(72) Inventor: Dunn, Sheila Bergeron, Mason, NH 03048 (US)
(74) Representative: French, Clive Harry

(57) **Abstract**

An illumination system providing monochromatic light output includes at least one illumination source providing white light and a monochromatic filter, disposed between the at least one illumination source and an object to be illuminated, for converting the white light to monochromatic light of a predetermined color and/or wavelength.

## Description

### CROSS-REFERENCE TO RELATED APPLICATIONS

This application is related to and claims priority from United States provisional patent application number 60/811,552 entitled Systems And Methods For Providing Monochromatic Light filed June 7, 2006 and fully incorporated herein by reference.

### TECHNICAL FIELD

The present invention relates to lighting systems and more particularly, relates to a system and method for providing monochromatic light of any color or wavelength from a white light source by use of a color filter.

### BACKGROUND INFORMATION

there are a number of applications that utilize lighting or illumination of varying color, wavelength or intensity. One area that is particularly suited for various lighting techniques is in the area of product or package inspection. Inspection knowingly utilizes a nominated camera system with appropriate lighting to perform the inspection task cured such inspection systems have typically used backlights, area arrays, ring lights, Diffuse On-Axis Lights (DOAL'S), Square Continuous Diffuse Illuminators (SCDI's) and Continuous Diffuse Illuminators (CDI's).

Unfortunately, most of the lighting systems presently available provide white light. There are many situations where light of a specific color or wavelength would be useful if not necessary in performing the inspection task at hand. Since it is often desirable to be able to change the inspection system from one job to the next, this has meant purchasing lighting in various colors or wavelengths to suit specific applications. This is expensive and requires an inventory of lighting of various colors and wavelengths.

Accordingly, what is needed is a system and method for providing a lighting system having removable filters which can provide light at the desired color and/or wavelength while utilizing the same underlying white light lighting element.

### SUMMARY

The present invention features an illumination system providing monochromatic light output. The illumination system comprises at least one illumination source which provides white light and a monochromatic filter, disposed between the at least one illumination source and an object to be illuminated, for converting the white light to monochromatic light of a predetermined color and/or wavelength.

In the preferred embodiment, the at least one illumination source is a white LED array. The at least one illumination source may be a ring light, a dual off axis illumination source or any other type of light source suitable to the provision of a monochromatic filter. The illumination source may be mounted in a housing and the housing may include a light diffuser or clear window disposed between the at least one illumination source and the object to be illuminated, wherein the monochromatic filter is disposed between the illumination source and the light diffuser or clear window.

### BRIEF DESCRIPTION OF THE DRAWINGS

These and other features and advantages of the present invention will be better understood by reading the following detailed description, taken together with the drawings wherein:

FIG. 1 is top view of an illumination source and the form of an LED array; and

FIG. 2 is a cross-sectional view of the LED array of figure 1 showing the monochromatic light filter of the present invention in place between the diffuser and the LED array.

### DETAILED DESCRIPTION OF THE PREFERRED EMBODIMENTS

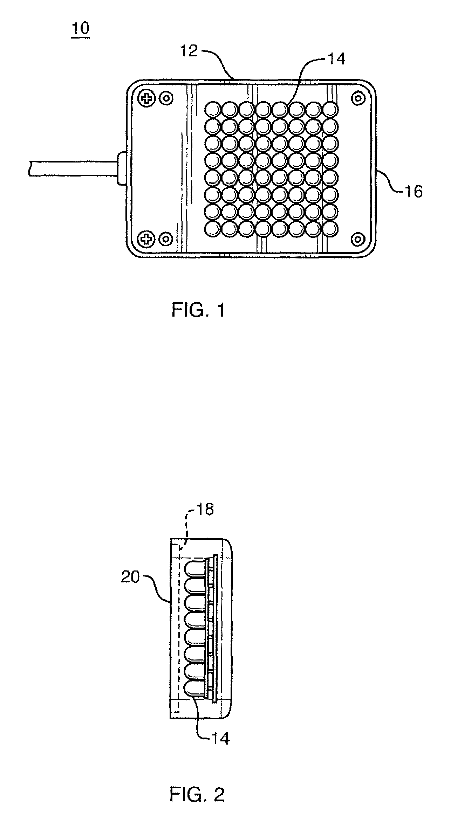

The present invention features an illumination system 10, figure 1, including an illumination source 12 such as an LED array having a prearranged matrix of LED's 14 which emit white light. The LED's are arranged and held in place in a case 16. The present invention is not limited to an LED array but as those skilled in the art will appreciate, can be utilized with any white light illuminator including, but not limited to, backlights, area arrays, ring lights, DOALS, SCDI's and CDI's.

The present invention features the addition of a monochromatic light filter 18, figure to which is interposed between the LED's 14 and a light diffuser or clear window 20. The light filter 18 is easily replaceable by the user to customize or otherwise convert the illumination source 10 into one providing a specific color or wavelength of light desired without having to replace the entire illumination device.

In the preferred embodiment, thin film filter material is ideal from which to create the filter 18, although filter thickness can vary depending on the package size and light output and color or wavelength requirements. In another embodiment, the filter 18 may be eliminated to either side of the light diffuser or clear window 20.

Modifications and substitutions by one of ordinary skill in the art are considered to be within the scope of the present invention, which is not to be limited except by the allowed claims and there legally equivalents.

## Claims

1. An illumination system providing monochromatic light output, said illumination system comprising:
at least one illumination source, said a least one illumination source providing white light; and
a monochromatic filter, disposed between said at least one illumination source and an object to be illuminated, for converting said white light to monochromatic light of a predetermined color and/or wavelength.

2. The illumination system of claim 1, wherein said at least one illumination source is a white LED array.

3. The illumination system of claim 1, wherein said at least one illumination source is selected from the group of lighting consisting of a ring light, a DOAL, an SCDI, a CDI.

4. Illumination system of claim 1, wherein said illumination sources mounted in a housing and wherein said housing includes a light diffuser or clear window disposed between said at least one illumination source and said object to be illuminated, and wherein said monochromatic filter is disposed between said illumination source and said light diffuser or clear window.
